Europäisches Patentamt

European Patent Office

Office européen des brevets

(19)

(11) **EP 0 615 188 B1**

(12) **FASCICULE DE BREVET EUROPEEN**

(45) Date de publication et mention
de la délivrance du brevet:
**05.11.1997 Bulletin 1997/45**

(51) Int Cl.⁶: **G06F 11/28**

(21) Numéro de dépôt: **94400503.2**

(22) Date de dépôt: **08.03.1994**

(54) **Procédé pour contrôler l'exécution correcte d'un programme d'ordinateur multitâche**

Verfahren zur Überprüfung des eindwandfreien Ablaufs eines Mehrfaden-Computerprogramms

Method for checking the correct execution of a multitasking computer program

(84) Etats contractants désignés:
AT BE CH DE DK ES FR GB GR IT LI LU NL PT SE

(30) Priorité: **11.03.1993 FR 9302812**

(43) Date de publication de la demande:
**14.09.1994 Bulletin 1994/37**

(73) Titulaire: **GEC ALSTHOM TRANSPORT SA**
75016 Paris (FR)

(72) Inventeurs:
• **Bres, Guillaume**
F-92120 Montrouge (FR)
• **Simon, François**
F-91290 Arpajon (FR)

(74) Mandataire: **Fournier, Michel et al**
c/o ALCATEL ALSTHOM,
**Département de Propriété Industrielle,
30, avenue Kléber
75116 Paris (FR)**

(56) Documents cités:
**DE-A- 2 939 194**      **US-A- 4 251 885**

• **ONDE ELECTRIQUE vol. 68, no. 6, Novembre
1988, Paris, FR, pp. 52-58; A. SCHWEITZER ET
AL. 'Sécurité des systèmes électroniques
programmables assurée par un contrôle en ligne
basé sur l'analyse de signature'**

## Description

L'invention porte sur un procédé pour contrôler l'exécution correcte d'un programme d'ordinateur multitâche par un ou des processeurs dans lequel les tâches du programme émettent des messages et sont exécutées en réponse à la prise en compte de tels messages, les messages incluant chacun une estampille temporelle.

Le document US-A-4 251 885 donne un exemple d'un système dans lequel l'exécution correcte d'une sous-routine est indiquée par la génération d'un code spécifique.

L'exécution d'un programme multitâche est correcte si les quatre conditions suivantes sont satisfaites (le ou les processeurs étant non défaillants).

1°) Chaque tâche émet un ou plusieurs messages en réponse à la prise en compte d'un ou plusieurs autres messages dans un délai inférieur au délai imposé au moment de la conception du programme.

2°) Tout message émis par une tâche est correctement transmis à la ou aux tâches destinatrices de ce message.

3°) Tout message émis par une tâche a une valeur correcte.

4°) Les tâches, d'une part, prennent en compte les messages qui leurs sont destinés dans un ordre chronologique fixé au moment de la conception du programme, et d'autre part, sont exécutées selon un ordre chronologique fixé aussi au moment de la conception du programme. Par la suite, on considérera que l'exécution normale du programme détermine un graphe acyclique dont les sommets sont les tâches et les arcs les flots de messages entre les tâches.

Pour contrôler que la première condition est satisfaite, il est connu de propager les estampilles temporelles dans les tâches au travers des messages et comparer dans chaque tâche l'estampille de chaque message à un instant local donné par une horloge.

Pour contrôler que la seconde condition est satisfaite, il est connu d'utiliser des codes détecteur d'erreur par exemple du type CRC.

Pour contrôler que la troisième condition est satisfaite, il est connu de répliquer les tâches du programme et d'exploiter des techniques de vote majoritaire.

L'objet de l'invention telle qu'elle est définie dans les revendications est d'apporter une solution pour contrôler que la quatrième condition est satisfaite. Cette condition n'est pas satisfaite lorsque, par exemple, des messages sont perdus ou dupliqués ou encore omis par les tâches. Un procédé pour contrôler que cette quatrième condition est satisfaite par un programme d'ordinateur multitâche est connu du document IEEE, 1991, "Logical Time in Distributed Computing Systems", Colin Fidge. Dans ce procédé connu, chaque tâche émettrice d'un message élabore une clef d'exécution associée à ce message et qui identifie un relation de dépendance causale pour ce message laquelle est définie par l'ordre chronologique d'exécution des tâches et l'ordre chronologique de prise en compte des messages par ces tâches ayant conduit à l'émission de ce message par cette tâche émettrice. Chaque clef d'exécution est constituée d'une liste de compteurs, un compteur pour chaque tâche du programme, formant un vecteur temporel. A chaque fois qu'une tâche émet un message pour une tâche destinatrice, elle incrémente dans son vecteur temporel le compteur qui lui correspond et transmet une copie de ce vecteur temporel à la tâche destinatrice. La tâche destinatrice met à jour son propre vecteur temporel en prenant, pour chaque compteur, la plus grande des valeurs de ce compteur entre son vecteur temporel et le vecteur temporel reçu. Un problème qui se pose dans ce procédé connu est que les clefs d'exécution ont des tailles en nombre de bits très importantes, ce nombre étant linéairement dépendant du nombre de tâches constituant le programme (un compteur pour chaque tâche). Il s'ensuit que le transfert des clefs d'exécution entre tâches émettrices de messages et tâches réceptrices de tels messages consomme beaucoup de temps et pénalise, le cas échéant, l'exécution temps réel du programme d'ordinateur. Par ailleurs, dans ce procédé connu, il n'a pas été envisagé de contrôler automatiquement l'exécution correcte d'un programme d'ordinateur multitâche pendant son exploitation opérationnelle. Ce procédé est en fait utilisé en premier lieu pour le déverminage hors ligne d'un programme d'ordinateur multitâche.

L'invention a pour but de remédier à ces inconvénients. A cet effet, l'invention a pour objet un procédé pour contrôler l'exécution correcte d'un programme d'ordinateur multitâche, caractérisé en ce que chaque clef d'exécution est élaborée par combinaison bit à bit de mots binaires contenant chacun la représentation binaire d'un identificateur de tâche ou d'un identificateur de message ou d'une estampille temporelle de message, les bits de chaque mot binaire ayant préalablement été permutés circulairement avec des ampleurs différentes pour chaque mot.

La taille en bits d'une telle clef d'exécution dépend donc uniquement du nombre de bit nécessaires pour la représentation binaire d'un identificateur de tâche ou d'un identificateur de message ou d'une estampille temporelle auquel s'ajoute, éventuellement, le nombre de bits utilisés pour la permutation circulaire de plus grande ampleur.

La combinaison bit à bit est de préférence un OU exclusif bit à bit.

Si le programme d'ordinateur multitâche commande un équipement industriel, par exemple un équipement ferroviaire, une erreur d'exécution du programme multitâche peut avoir de graves conséquences. Il est donc utile, voire nécessaire, de contrôler l'exécution correcte d'un tel programme d'ordinateur pendant son exploitation de manière qu'en cas d'occurrence d'une erreur d'exécution, une alarme puisse être émise et une commande restrictive produite pour l'équipement commandé. A cet effet, selon un autre aspect de l'invention, une au moins desdites tâches émet un ou plusieurs de tels messages en réponse à la prise en compte d'au moins un message d'entrée, une comparaison entre la clef d'exécution élaborée en dernier lieu par une tâche du programme et une clef de référence élaborée à partir dudit message d'entrée étant effectuée, sur la base de laquelle une erreur d'exécution peut être détectée.

Un mode de réalisation de l'invention est maintenant décrit en détail en référence aux dessins.

La figure 1 représente schématiquement l'architecture d'une installation de traitement de données pour la mise en oeuvre du procédé selon l'invention.

La figure 2 représente schématiquement des tâches d'un programme d'ordinateur multitâche communiquant entre elles par des messages.

La figure 3 est un diagramme temporel dans lequel apparaît l'ordre d'exécution des tâches du programme représentées à la figure 2 et l'ordre de prise en compte des messages par ces tâches.

La figure 4a représente schématiquement un graphe d'exécution d'un programme d'ordinateur multitâche.

La figure 4b illustre la façon dont est élaborée une clef d'exécution de référence sous la forme d'une chaîne de causalité.

La figure 5 illustre la façon dont est élaborée une clef d'exécution par une tâche émettrice d'un message.

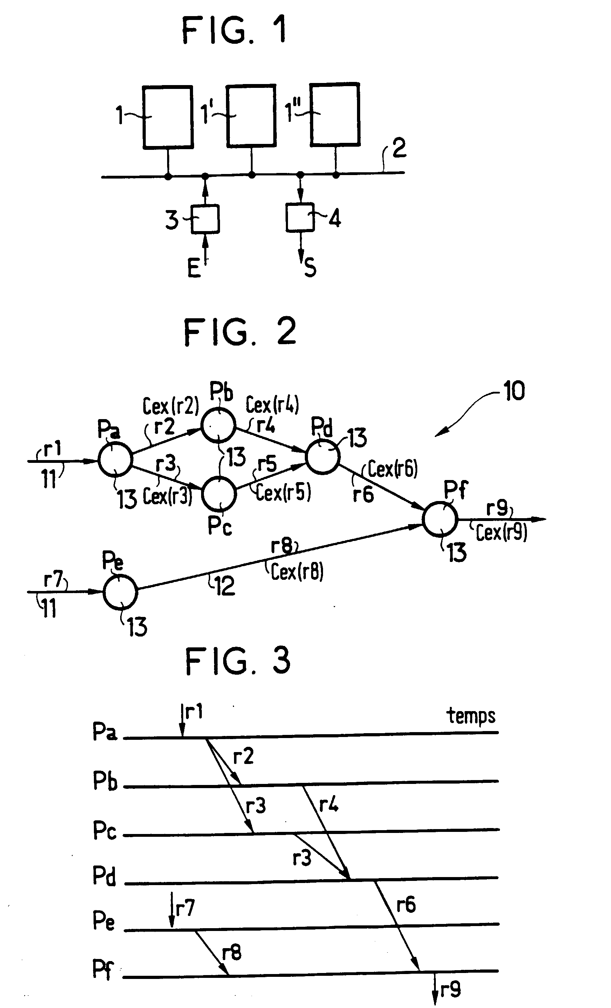

Sur la figure 1, l'architecture de l'installation de traitement de données prévue pour mettre en oeuvre le procédé selon l'invention est constituée d'une part d'un ou plusieurs processeurs 1,1',1" chargés d'exécuter chacun une ou plusieurs tâches d'un programme multitâche à contrôler tel que celui 10 représenté figure 2, d'autre part, d'un organe d'entrée 3 et d'un organe de sortie 4 sains sur défaillance communiquant entre eux par une liaison spécialisée et avec les processeurs par un bus 2. De tels organes d'entrée ou de sortie peuvent être vus comme des processeurs particuliers programmés pour accomplir les fonctions suivantes. Pour chaque signal de données E destiné au programme à contrôler, l'organe d'entrée 3 forme un message d'entrée incluant une estampille temporelle et le communique en parallèle au programme et à l'organe de sortie 4. Comme décrit par la suite, pendant l'exécution du programme par les processeurs, les tâches élaborent des clefs d'exécution à chaque fois qu'elles émettent un message. En parallèle, l'organe de sortie calcule une clef d'exécution de référence à partir du message d'entrée fournie par l'organe d'entrée. Sur la base d'une comparaison de la dernière clef d'exécution élaborée par une tâche du programme avec la clef d'exécution de référence, l'organe de sortie 4 détecte la présence ou l'absence d'une erreur d'exécution et fournit une sortie S adaptée au résultat de la comparaison.

Sur la figure 2, un exemple simple de programme d'ordinateur multitâche 10 est représenté. Il comporte 6 tâches 13 référencées Pa, Pb, Pc, Pd, Pe, Pf émettrices de messages internes 12 référencés r2,r3,r4,r5,r6,r8,r9. Les tâches Pa et Pe reçoivent respectivement des messages d'entrée 11 désignés par r1,r7. En réponse au message r1, la tâche Pa, lorsqu'elle est exécutée, émet les messages r2 et r3. En réponse au message r7, la tâche Pe, lorsqu'elle est exécutée, émet le message r8. Les tâches Pb,Pc,Pd,Pf sont exécutées en réponse à la prise d'un ou de plusieurs messages internes et la tâche Pf, exécutée en dernier, émet le message de sortie r9.

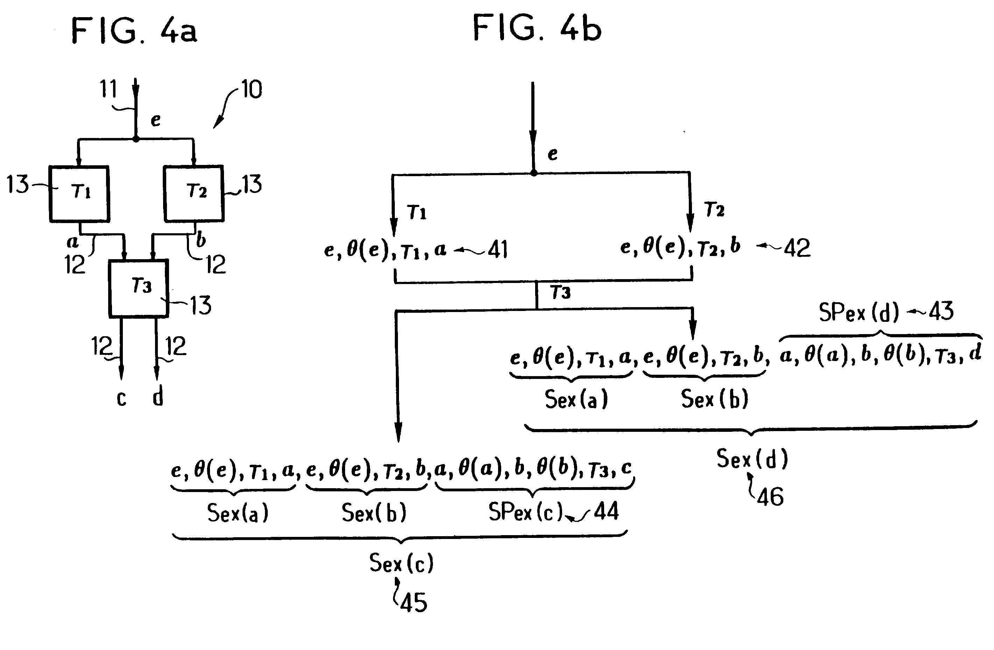

Sur la figure 3, le diagramme illustre l'ordre chronologique normal d'exécution des tâches 13 du programme 10 et l'ordre chronologique normal de prise en compte des messages d'entrée 11 ou messages internes 12 par les tâches. Dans cet exemple, la tâche Pe prend en compte le message r7 avant que la tâche Pa prenne en compte le message r1. Par ailleurs la tâche Pf émet le message r9 quand elle peut prendre en compte les messages r6 et r8 résultant de la prise en compte des messages r7 et r1 par les tâches Pe et Pa.

Le procédé d'élaboration des clefs d'exécution par les tâches est maintenant décrit en prenant l'exemple du programme 10 de la figure 2.

1- Cas des tâches Pa et Pe.

Les tâches Pa et Pe prennent chacune en compte un message d'entrée 11 fourni par l'organe d'entrée 3. Chaque message d'entrée inclut au moins un identificateur de message, une estampille temporelle et des données. L'identificateur de message est classiquement le nom symbolique du message défini au moment de la conception du programme. L'estampille temporelle est classiquement une date système affectée par l'organe d'entrée au message d'entrée. Si plusieurs messages d'entrée sont fournis par l'organe d'entrée avec des identificateurs de message identiques, ils ont forcément des estampilles de valeurs différentes. Par ailleurs chaque tâche dispose d'un identificateur de tâche et de l'identificateur de chaque message interne qu'elle émet. L'identificateur de tâche est le nom symbolique de la tâche défini au moment de la conception du programme. De la même façon, l'identificateur de message interne est le nom symbolique du message interne défini au moment de la conception du programme. En réponse à la prise en compte du message r1, la tâche Pa, en s'exécutant, récupère l'identificateur de message et l'estampille temporelle du message r1. Elle élabore une clef d'exécution associée au message interne r2 de la façon suivante. Les représentations binaires de l'identificateur du message r1, de l'estampille temporelle attachée au message r1, l'identificateur de tâche de la tâche Pa, l'identificateur du message r2 sont placées respectivement dans des registres mémoire ayant chacun une longueur de B bits. Une permutation circulaire est appliquée sur les bits de chaque registre mémoire avec une ampleur prise parmi une liste d'ampleurs différentes préenregistrée accessible par la tâche Pa. Les permutations effectuées sur les différents registres mémoire ont des ampleurs différentes prises dans la liste d'ampleurs. Cette liste d'ampleurs peut consister dans une liste de valeurs entières ordonnées par ordre croissant et commençant par la valeur 1, du type 1,2,3...etc. Après permutation, les valeurs des registres mémoire sont additionnées bit à bit sans retenue pour obtenir une signature d'exécution Sex(r2) sous forme d'un mot binaire de B bits. La clef d'exécution Cex(r2) associée au message r2 est constituée de la signature d'exécution Sex(r2) calculée et d'un compteur de contribution -de tâche Nex(r2). Pour la clef d'exécution du message r2, la valeur du compteur Nex(r2) est fixée à 1 car elle ne dépend d'aucune autre tâche ayant été exécutée avant elle.

La tâche Pa élabore aussi une clef d'exécution Cex(r3) associée au message r3 de façon similaire comme pour le message r2, la représentation symbolique du message r2 étant remplacée par la représentation symbolique du message r3. La valeur du compteur Nex(r3) est aussi fixée à 1.

De façon similaire, la tâche Pe, lorsqu'elle est exécutée, élabore une clef d'exécution Cex(r8) pour le message r8 comme décrit ci-dessus. La valeur du compteur Nex(r8) est fixée à 1.

Les clefs d'exécution élaborées par les tâches Pa et Pe sont transmises avec les messages r2, r3, r8 aux tâches réceptrices de ces messages c'est-à-dire que la clef d'exécution Cex(r2) est transmise à la tâche Pb, la clef d'exécution Cex(r3) est transmise à la tâche Pc et la clef d'exécution Cex(r8) est transmise à la tâche Pf.

2-Cas des tâches Pb,Pc,Pd

Chacune des ces tâches prend en compte un message interne qui est émis par une tâche et reçoit par conséquent une clef d'exécution associée au message qu'elle prend en compte. Ces tâches dépendent d'une tâche ayant été exécutée avant elles.

La tâche Pb récupère de la clef d'exécution Cex(r2) la signature Sex(r2) et le compteur Nex(r2) et du message r2, l'identificateur et l'estampille temporelle de ce message. L'estampille temporelle du message r2 est identique à celle du message r1 car le message r2 est dérivé directement du message r1. La tâche Pb élabore une clef d'exécution Cex(r4) pour le message r4 de la façon suivante. Les représentations binaires de l'identificateur du message r2, de l'estampille temporelle associée au message r2, de l'identificateur de tâche de la tâche Pb, de l'identificateur du message r4 sont placées respectivement dans des registres mémoire ayant chacun une longueur de B bits. Une permutation circulaire est appliquée sur les bits de chaque registre mémoire avec une ampleur prise parmi la même liste d'ampleurs que pour la tâche Pa. Après permutation, les valeurs des registres mémoire sont additionnées bit à bit pour obtenir une signature partielle d'exécution SPex(r4) sous forme d'un mot binaire de B bits. Une permutation circulaire est appliquée sur les bits de SPex(r4) avec une ampleur égale à Nex(r2). Après permutation des bits, les valeurs de Sex(r2) et SPex(r4) sont additionnées bit à bit sans retenue pour obtenir une signature d'exécution Sex(r4) sous forme d'un mot binaire de B bits. La clef d'exécution Cex(r4) associée au message r4 est constituée de Sex(r4) et d'un compteur Nex(r4) dont la valeur est égale à Nex(r2)+1.

De façon similaire la tâche Pc élabore une clef d'exécution Cex(r5).

Pour élaborer la clef d'exécution associée au message r6, la tâche Pd récupère d'abord des clefs d'exécution Cex(r4) et Cex(r5) donc les signatures d'exécution Sex(r4) et Sex(r5), les compteurs Nex(r4) et Nex(r5). Elle récupère ensuite des messages r4 et r5 leur identificateur de message et leur estampille temporelle. L'estampille temporelle des messages r4 et r5 est identique à celle du message r1.

La tâche Pd élabore, lorsqu'elle s'exécute, une clef d'exécution Cex(r6) pour le message r6 de la façon suivante. Les représentations binaires de l'identificateur du message r5, de l'estampille temporelle associée au message r5, de l'identificateur du message r4, de l'estampille du message r4, de l'identificateur de tâche de la tâche Pd, de l'identificateur du message r6 sont placées respectivement dans des registres mémoire ayant chacun une longueur de B bits. Une permutation circulaire est appliquée sur les bits de chaque registre mémoire avec une ampleur prise parmi la même liste d'ampleurs que pour la tâche Pa. Après permutation, les valeurs des registres mémoire sont additionnées bit à bit sans retenue pour obtenir une signature partielle d'exécution SPex(r6) sous forme d'un mot binaire de B bits. Une permutation circulaire est appliquée sur les bits de Sex(r5) avec une ampleur égale à Nex(r4), sur les bits de SPex(r6) avec une ampleur égale à Nex(r4)+Nex(r5). Après permutation des bits, les valeurs de Sex(r5), Sex(r4) et SPex(r6) sont additionnées bit à bit sans retenue pour obtenir une signature d'exécution Sex(r6) sous forme d'un mot binaire de B bits. La clef d'exécution Cex(r6) associée au message r6 est constituée de Sex(r6) et d'un compteur Nex(r6) dont la valeur est égale à Nex(r4)+Nex(r5)+1.

Pour élaborer la clef d'exécution associée au message r9, la tâche Pf récupère d'abord des clefs d'exécution Cex(r6) et Cex(r8) donc les signatures d'exécution Sex(r6) et Sex(r8), les compteurs Nex(r6) et Nex(r8). Elle récupère ensuite des messages r6 et r8 leur identificateur de message et leur estampille temporelle. L'estampille temporelle du message r6 est identique à celle du message r1 et l'estampille temporelle du message r8 est identique à celle du message r7.

La tâche Pf élabore, lorsqu'elle s'exécute, une clef d'exécution Cex(r9) pour le message r9 de la façon suivante. Les représentations binaires de l'identificateur du message r8, de l'estampille temporelle associée au message r8, de l'identificateur du message r6, de l'estampille du message r6, de l'identificateur de tâche de la tâche Pf, de l'identificateur du message r9 sont placées respectivement dans des registres mémoire ayant chacun une longueur de B bits. Une permutation circulaire est appliquée sur les bits de chaque registre mémoire avec une ampleur prise parmi la même liste d'ampleurs que pour la tâche Pa ou la tâche Pe. Après permutation, les valeurs des registres mémoire sont additionnées bit à bit sans retenue pour obtenir une signature partielle d'exécution SPex(r9) sous forme d'un mot binaire de B bits. Une permutation circulaire est appliquée sur les bits de Sex(r8) avec une ampleur égale à Nex(r6), sur les bits de SPex(r9) avec une ampleur égale à Nex(r8)+Nex(r6). Après permutation des bits, les valeurs de Sex (r8), Sex(r6) et SPex(r9) sont additionnées bit à bit sans retenue pour obtenir une signature d'exécution Sex(r9) sous forme d'un mot binaire de B bits. La clef d'exécution Cex(r9) associée au message r9 est constituée de Sex(r9) et d'un compteur Nex(r9) dont la valeur est égale à Nex(r8)+Nex(r6)+1. La clef d'exécution Cex(r9) est transmise à l'organe de sortie 4.

Par ailleurs, une clef d'exécution de référence Cref(r9) est élaborée par l'organe de sortie 4 à partir des messages d'entrée r1 et r2 en répétant le processus décrit ci-dessus pour le graphe d'exécution normale du programme 10 de sorte qu'une erreur d'exécution peut être détectée par comparaison de la clef d'exécution de référence Cref(r9) avec la clef d'exécution Cex(r9). Dans le cas où, pendant l'exploitation du programme 10, plusieurs messages r1 et plusieurs messages correspondant r7 sont émis et qu'un message r1 par exemple est omis par la tâche Pa, certains messages r6 et r7 pris en compte par la tâche Pf auront des estampilles temporelles différentes. Il en résultera qu'une erreur d'exécution sera détectée par l'organe de sortie 4.

Le graphe d'exécution normale du programme 10 peut facilement être obtenu par analyse syntaxique (par exemple au moment de la compilation) du code source du programme 10 duquel sont extraits les noms symboliques des messages d'entrée, des messages internes, des tâches et la relation de dépendance causale du message r9. Sur la figure 4a, un graphe d'exécution normale d'un programme multitâche est représenté. Sur cette figure, le programme comporte 3 tâches T1,T2,T3 référencées 13. Les tâches T1,T2 reçoivent en parallèle un message d'entrée 11 dont l'identificateur est désigné par le symbole e. Les tâches T1 et T2 émettent respectivement, en réponse au message d'entrée 11, les messages internes 12 dont les identificateurs sont désignés par les symboles a et b. La tâche T3, émet en réponse aux messages internes 12, deux messages internes dont les identificateurs sont désignés par les symboles c et d. A partir de ce graphe d'exécution, des chaînes de causalité pour chaque message interne émis par une tâche peuvent être construites automatiquement. La figure 4b montre différentes chaînes de causalité 41,42,45,46 élaborée pour les messages a,b,c,d. Si les symboles T1,T2,T3 désignent les identificateurs des tâches T1,T2,T3 et les symboles $\theta(e)$, $\theta(a),\theta(b)$ (ici $\theta(a)=\theta(b)=\theta(e)$) désignent les estampilles temporelles attribuées aux messages e,a,b, chaque chaîne de causalité comporte l'ensemble des éléments, représentés symboliquement, qui sont utilisés par une tâche pour élaborer un signature d'exécution. Ainsi, la chaîne de causalité 41 correspond à Sex(a), la chaîne 42 à Sex(b), la chaîne 45 à Sex(c) et la chaîne 46 à Sex(d). Dans les chaînes Sex(c) et Sex(d) apparaissent aussi les signatures partielles SPex(c) et Spex(d) référencées 44,43. L'organe de sortie est donc agencé pour élaborer de telles chaînes de causalité dans lesquelles les valeurs des estampilles des messages sont mis à jour en fonction des messages d'entrée fournis par l'organe d'entrée et ensuite combiner les éléments (symboles) des chaînes de causalité pour obtenir une clef d'exécution de référence correspondant à une valeur d'estampille.

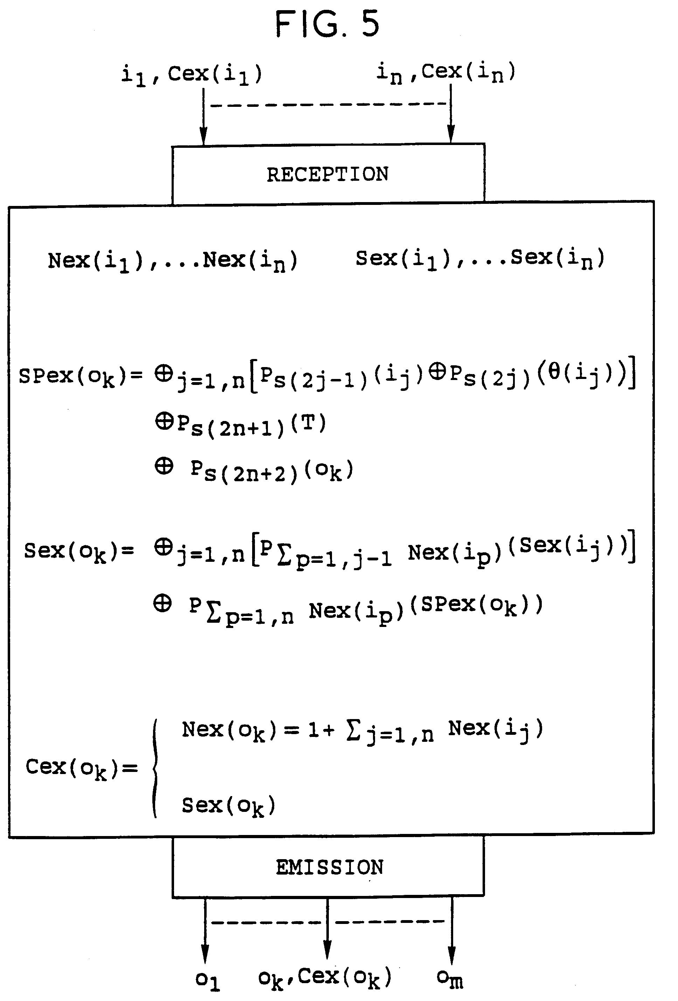

Le procédé selon l'invention est maintenant décrit de façon générale en référence à la figure 5.

Par la suite les définitions suivantes sont utilisées.

B est un entier indiquant le nombre de bits nécessaires à la représentation binaire d'une signature d'exécution.

$P_k$ est la fonction permutation circulaire d'ampleur k bits dans un mot de B bits

r est un entier indiquant le nombre de bits nécessaires à la représentation binaire d'un symbole que ce soit un identificateur de message, de tâche ou une estampille temporelle.

$n_{max}$ est un entier égal au nombre maximal de messages qu'une tâche prend en compte.

s est une suite d'entiers naturels représentant des décalages de bits tels que $r + max_j\{s(i)\}<=B$, s(i) étant le ième élément de la liste, l'indice pour cette suite allant 1 à de $2(1+n_{max})$.

$\oplus$ symbolise la fonction logique OU exclusif "bit à bit".

Une tâche T sur la figure 5 reçoit en entrée et prend en compte n premiers messages $i_1,...i_n$ et émet m seconds messages $o_1,...o_m$. Elle possède un identificateur de tâche désigné par le symbole T.

Lorsque la tâche T est exécutée, elle récupère en parallèle aux n premiers messages, n clefs d'exécution Cex $(i_1),...Cex(i_n)$. Si $i_j$ est un message d'entrée, alors par construction $Cex(i_j)$ a tous ses bits à 0.

Des clefs d'exécution $Cex(i_1),...Cex(i_n)$, elle récupère n compteurs de contribution de tâche $Nex(i_1),...Nex(i_n)$ et n signatures d'exécution $Sex(i_1),...Sex(i_n)$. Des n premiers messages pris en compte, elle récupère n identificateurs de messages $i_1,...i_n$ et n estampilles temporelles de message $\theta(i_1),...\theta(i_n)$.

Pour chaque second message $o_k$, la tâche T élabore une clef d'exécution $Cex(o_k)$ de la façon suivante.

Elle élabore d'abord une signature partielle SPex(o$_j$) à partir de la relation suivante:

$$SPex(o_k) = \oplus_{j=1,n}[P_{s(2j-1)}(i_j) {}^{\oplus} P_{s(2j)}(\theta(i_j))]$$

$$\oplus P_{s(2n+1)}(T)$$

$$\oplus P_{s(2n+2)}(o_k)$$

Elle élabore ensuite une signature d'exécution Sex(o$_k$) à partir de la relation suivante:

$$Sex(o_k) = \oplus_{j=1,n}[P_{\Sigma p=1,j-1} Nex(i_p)(Sex(i_j))]$$

$$\oplus P_{\Sigma p=1,n} Nex(i_p)(SPex(o_k))$$

La clef d'exécution Cex(o$_k$) pour le message o$_k$ est constituée de Sex(o$_k$) et d'un compteur Nex(o$_k$) dont la valeur est égale à $\Sigma_{j=1,n} Nex(i_j) + 1$.

Il est entendu que toutes les tâches d'un programme dont l'exécution est contrôlée exploitent la même liste s d'entiers naturels pour les permutations.

L'organe de sortie 4 est agencé pour exploiter la même suite d'entiers naturels que les tâches de sorte que si le programme multitâche s'exécute normalement, la clef de référence élaborée par l'organe de sortie est identique à la clef d'exécution élaborée en dernier lieu par une tâche pour un ou des messages d'entrée. Par ailleurs, l'organe de sortie est agencé pour mettre à jour la valeur de la clef d'exécution de référence Cref en fonction de nouveaux messages d'entrée pris en compte par les tâches à des instants différents de sorte que le contrôle est effectué durant tout le temps que le programme contrôlé est exploité.

**Revendications**

1. Un procédé pour contrôler l'exécution correcte d'un programme d'ordinateur multitâche (10) par un ou des processeurs (1,1',1") dans lequel les tâches (Pa,Pb,Pc,Pd,Pe,Pf,T1,T2,T3,T) du programme émettent des messages (r2,r3,r4,r5,r6,r8,r9,a,b,c,d,o$_k$) et sont exécutées en réponse à la prise en compte de tels messages, chaque message incluant une estampille temporelle ($\theta$(a),$\theta$(b),$\theta$(i$_j$)), chaque tâche émettrice d'un message élaborant une clef d'exécution (Cex(o$_k$)) associée à ce message et qui identifie une relation de dépendance causale du message définie par l'ordre chronologique d'exécution des tâches et l'ordre chronologique de prise en compte des messages par ces tâches ayant conduit à l'émission de ce message par cette tâche émettrice, <u>caractérisé</u> en ce que chaque clef d'exécution (Cex(o$_k$)) est élaborée par combinaison ($\oplus$) bit à bit de mots binaires contenant chacun la représentation binaire d'un identificateur de tâche ou d'un identificateur de message ou d'une estampille temporelle de message, les bits de chaque mot binaire ayant préalablement été permutés circulairement avec des ampleurs différentes (s(2j-1),s(2j),s(2n+1),s(2n+2)) pour chaque mot, procédé dans lequel une (Pa,Pe,T1,T2) au moins desdites tâches émet un ou plusieurs de tels messages en réponse à la prise en compte d'au moins un message d'entrée (r1,r7,e), une comparaison entre la clef d'exécution élaborée en dernier lieu par une tâche du programme et une clef de référence élaborée à partir dudit message d'entrée étant effectuée, sur la base de laquelle une erreur d'exécution peut être détectée.

2. Le procédé selon la revendication 1, dans lequel chaque tâche (T) réceptrice d'un premier message (i$_j$) et émettrice d'un second message (o$_k$) élabore pour ce second message une clef d'exécution (Cex(o$_k$)) en combinant bit à bit après permutation circulaire avec des ampleurs différentes, un mot binaire contenant la représentation binaire de l'identificateur du premier message (i$_j$), un mot binaire contenant la représentation binaire de l'estampille temporelle ($\theta$(i$_j$)) attachée au premier message, un mot binaire contenant la représentation binaire de l'identificateur de cette tâche (T), un mot binaire contenant la représentation binaire de l'identificateur du second message (o$_k$).

3. Le procédé selon la revendication 2, dans lequel certaines tâches reçoivent une clef d'exécution (Cex(i$_j$)) en parallèle avec un premier message (ij) et émettent un second message (o$_k$), chacune (T) de ces certaines tâches élaborant une clef d'exécution (Cex(o$_k$)) pour ce second message en combinant bit à bit après permutation circulaire avec des premières ampleurs différentes (s(2j-1), s(2j), s(2n+1), s(2n+2)) un mot binaire contenant la représentation binaire de l'identificateur du premier message (i$_j$), un mot binaire contenant la représentation binaire de

l'estampille temporelle ($\theta(i_j)$) attachée au premier message, un mot binaire contenant la représentation binaire de l'identificateur de cette tâche (T), un mot binaire contenant la représentation binaire de l'identificateur du second message ($o_k$) pour obtenir un mot binaire résultant et en combinant bit à bit après permutation circulaire avec des secondes ampleurs différentes (N1,...Nn), le mot binaire résultant avec la clef d'exécution reçue en parallèle avec le premier message.

4. Le procédé selon l'une des revendications 3, dans lequel les premières ampleurs de permutation circulaire sont données par une suite de valeurs entières détenue par chaque tâche.

5. Le procédé selon les revendications 3 ou 4, dans lequel les secondes ampleurs de permutation circulaire sont données par un compteur faisant partie de la clef d'exécution reçue en parallèle avec le premier message

6. Le procédé selon l'une des revendications 1 à 5, dans lequel ladite combinaison bit à bit est un OU exclusif bit à bit.

**Patentansprüche**

1. Verfahren zur Kontrolle der korrekten Ausführung eines Multitask-Rechnerprogramms (10) durch mindestens einen Prozessor (1, 1', 1"), in dem die Aufgaben (Pa, Pb, Pc, Pd, Pe, Pf, T1, T2, T3, T) des Programms Nachrichten (r2, r3, r4, r5, r6, r8, r9, a, b, c, d, $o_k$) aussenden und unter Berücksichtigung solcher Nachrichten ausgeführt werden, wobei jede Nachricht eine Zeitmarke ($\Theta(a)$, $\Theta(b)$, $\Theta(i_j)$) enthält und jede eine Nachricht aussendende Aufgabe einen dieser Nachricht zugeordneten Ausführungsschlüssel ($Cex(o_k)$) erarbeitet, der eine kausale Abhängigkeitsbeziehung der Nachricht identifiziert, welche durch die chronologische Abfolge der Ausführung der Aufgaben und die chronologische Abfolge der Berücksichtigung der Nachrichten durch diese Aufgaben definiert ist, die zur Aussendung dieser Nachricht durch diese aussendende Aufgabe geführt haben, dadurch gekennzeichnet, daß jeder Ausführungsschlüssel ($Cex(o_k)$) durch eine Exklusiv-ODER-Verknüpfung ($\oplus$) Bit für Bit von Binärwörtern gebildet wird, die je die binäre Repräsentation einer Aufgabenidentifikation oder einer Nachrichtenidentifikation oder einer Nachrichten-Zeitmarke enthalten, wobei die Bits jedes Binärworts vorher zyklisch mit unterschiedlichen Umfängen ($s(2j-1)$, $s(2j)$, $s(2n+1)$, $s(2n+2)$) für jedes Wort permutiert wurden, und wobei mindestens eine der Aufgaben (Pa, Pe, T1, T2) eine oder mehrere solcher Nachrichten als Antwort auf die Berücksichtigung mindestens einer Eingangsnachricht (r1, r7, e) aussendet und ein Vergleich zwischen dem an letzter Stelle durch eine Aufgabe des Programms erarbeiteten Ausführungsschlüssel und einem ausgehend von der Eingangsnachricht erarbeiteten Bezugsschlüssel erfolgt, der eine Erfassung eines Ausführungsfehlers erlaubt.

2. Verfahren nach Anspruch 1, in dem jede eine erste Nachricht ($i_j$) empfangende und eine zweite Nachricht ($o_k$) aussendende Aufgabe (T) für diese zweite Nachricht einen Ausführungsschlüssel ($Cex(o_k)$) durch Kombination Bit für Bit nach zyklischer Permutation mit unterschiedlichen Umfängen ein Binärwort erarbeitet, das die binäre Darstellung der Identifikation der ersten Nachricht ($i_j$), ein Binärwort mit der binären Darstellung der der ersten Nachricht zugewiesenen Zeitmarke ($\Theta(i_j)$), ein Binärwort mit der binären Darstellung der Identifikation dieser Aufgabe (T) und ein Binärwort mit der binären Darstellung der Identifikation der zweiten Nachricht ($o_k$) kombiniert.

3. Verfahren nach Anspruch 2, in dem bestimmte Aufgaben einen Ausführungsschlüssel ($Cex(i_j)$) parallel mit einer ersten Nachricht ($i_j$) empfangen und eine zweite Nachricht ($o_k$) aussenden, wobei jede (T) dieser bestimmten Aufgaben einen Ausführungsschlüssel ($Cex(o_k)$) für diese zweite Nachricht erarbeitet, indem Bit für Bit nach zyklischer Permutation mit ersten unterschiedlichen Umfängen ($s(2j-1)$, $s(2j)$, $s(2n+1)$, $s(2n+2)$) ein Binärwort mit der binären Darstellung der Identifikation der ersten Nachricht ($i_j$), ein Binärwort mit der binären Darstellung der Zeitmarke ($\Theta(i_j)$), die der ersten Nachricht zugewiesen ist, ein Binärwort mit der binären Darstellung der Identifikation dieser Aufgabe (T) und ein Binärwort mit der binären Darstellung der Identifikation der zweiten Nachricht ($o_k$) kombiniert werden, um ein resultierendes Binärwort zu ergeben, und indem Bit für Bit nach zyklischer Permutation mit zweiten unterschiedlichen Umfängen (N1, ... Nn) das resultierende Binärwort mit dem Ausführungsschlüssel kombiniert wird, der parallel mit der ersten Nachricht empfangen wurde.

4. Verfahren nach Anspruch 3, bei dem die ersten Umfänge der zyklischen Permutation von einer Folge ganzzahliger Werte bestimmt wird, die in jeder Aufgabe enthalten ist.

5. Verfahren nach Anspruch 3 oder 4, bei dem die zweiten Umfänge der zyklischen Permutation von einem Zähler bestimmt werden, der zu dem parallel mit der ersten Nachricht empfangenen Ausführungsschlüssel gehört.

6. Verfahren nach einem der Ansprüche 1 bis 5, bei dem die Kombination Bit für Bit eine Exklusiv-ODER-Verknüpfung Bit-für-Bit ist.

**Claims**

1. A method of checking correct execution of a multitasking computer program (10) by one or more processors (1, 1' 1") in which the tasks (Pa, Pb, Pc, Pd, Pe, Pf, T1, T2, T3, T) of the program emit messages (r2, r3, r4, r5, r6, r8, r9, <u>a</u>, <u>b</u>, <u>c</u>, <u>d</u>, $o_k$) and are executed in response to such messages being taken into account, each message including a time stamp ($\theta(a)$, $\theta(b)$, $\theta(ij)$), each message-emitting task creating an execution key ($Cex(o_k)$) associated with said message and identifying a causal dependency relationship for said message defined by the chronological order of task execution and the chronological order in which the messages are taken into account by tasks that have caused the emitting task to emit messages, said method being characterized in that each execution key ($Cex(o_k)$) is created by the bitwise combination ($\oplus$) of binary words each containing the binary representation of a task identifier, a message identifier, or a message time stamp, with the bits of each binary word being firstly circularly permutated ($P()$) by different amounts ($s(2j-1)$, $s(2j)$, $s(2n+1)$, $s(2n+2)$) for each word, and in that at least one of said tasks (Pa, Pe, T1, T2) emits one or more such messages in response to taking at least one input message (r1, r7, <u>e</u>) into account, and in response to comparing the last execution key created by a task of the program with a reference key created from said input message(s), on the basis of which it is possible to detect an execution error.

2. A method according to claim 1, in which each task (T) receiving a first message ($i_j$) and task (T) emitting a second message ($o_k$) creates an execution key ($Cex(o_k)$) for said second message by bitwise combination, after circular permutation by different amounts, of a binary word containing the binary representation of the identifier of the first message ($i_j$), a binary word containing the binary representation of the time stamp ($\theta(i_j)$) associated with the first message, a binary word containing the binary representation of the identifier of said task (T), and a binary word containing the binary representation of the identifier of the second message ($o_k$).

3. A method according to claim 2, in which certain tasks receive an execution key ($Cex(i_j)$) in parallel with a first message ($i_j$) and emit a second message ($o_k$), each of said certain tasks (T) creating an execution key ($Cex(o_k)$) for said second message by bitwise combination, after circular permutation by the first different amounts ($s(2j-1)$, $s(2j)$, $s(2n+1)$, $s(2n+s)$), of a binary word containing the binary representation of the identifier of the first message ($i_j$), a binary word containing the binary representation of the time stamp ($\theta(i_j)$) associated with the first message, a binary word containing the binary representation of the identifier of said task (T), and a binary word containing the binary representation of the identifier of the second message ($o_k$) in order to obtain a resulting binary word, and by bitwise combination, after circular permutation by second different amounts (N1, ... Nn), of the resulting binary word and the execution key received in parallel with the first message.

4. A method according to claim 3, in which the first circular permutation amounts are given by a series of integer values held by each task.

5. A method according to claim 3 or 4, in which the second circular permutation amounts are given by a counter forming part of the execution key received in parallel with the first message.

6. A method according to any one of claims 1 to 5, in which said bitwise combination is a bitwise exclusive-OR.

# FIG. 1

# FIG. 2

# FIG. 3

# FIG. 4a

11  
e  
10

13 — $T_1$  $T_2$ — 13

a  b  
12  12

$T_3$ — 13

12  12

c  d

# FIG. 4b

e

$T_1$  $T_2$

$e, \theta(e), T_1, a$ — 41  $e, \theta(e), T_2, b$ — 42

$T_3$

SPex (d) — 43

$e, \theta(e), T_1, a, e, \theta(e), T_2, b, \overbrace{a, \theta(a), b, \theta(b), T_3, d}$

$\underbrace{}_{Sex(a)}$  $\underbrace{}_{Sex(b)}$

$\underbrace{\qquad\qquad\qquad\qquad}_{Sex(d)}$

46

$\underbrace{e, \theta(e), T_1, a,}_{Sex(a)} \underbrace{e, \theta(e), T_2, b,}_{Sex(b)} \underbrace{a, \theta(a), b, \theta(b), T_3, c,}_{SPex(c) — 44}$

$\underbrace{\qquad\qquad\qquad\qquad\qquad\qquad}_{Sex(c)}$

45

EP 0 615 188 B1

# FIG. 5

$$i_1, Cex(i_1) \qquad i_n, Cex(i_n)$$

RECEPTION

$$Nex(i_1), \dots Nex(i_n) \qquad Sex(i_1), \dots Sex(i_n)$$

$$SPex(o_k) = \oplus_{j=1,n}\left[P_{s(2j-1)}(i_j) \oplus P_{s(2j)}(\theta(i_j))\right]$$

$$\oplus P_{s(2n+1)}(T)$$

$$\oplus P_{s(2n+2)}(o_k)$$

$$Sex(o_k) = \oplus_{j=1,n}\left[P_{\sum_{p=1,j-1} Nex(i_p)}(Sex(i_j))\right]$$

$$\oplus P_{\sum_{p=1,n} Nex(i_p)}(SPex(o_k))$$

$$Cex(o_k) = \begin{cases} Nex(o_k) = 1 + \sum_{j=1,n} Nex(i_j) \\ \\ Sex(o_k) \end{cases}$$

EMISSION

$$o_1 \qquad o_k, Cex(o_k) \qquad o_m$$